Europäisches Patentamt

European Patent Office

Office européen des brevets

(11) Publication number: **0 430 350 A1**

# EUROPEAN PATENT APPLICATION

(21) Application number: 90203077.4

(22) Date of filing: 21.11.90

(51) Int. Cl.⁵: **C08K 3/00**, C08L 77/00,
//(C08K3/00,3:02,3:22),
(C08L77/00,23:08)

(30) Priority: 30.11.89 GB 8927041

(43) Date of publication of application:
05.06.91 Bulletin 91/23

(84) Designated Contracting States:
DE FR IT NL Bulletin

(71) Applicant: BIP CHEMICALS LIMITED
20 St. Mary's Parsonage
Manchester M3 2NL(GB)

(72) Inventor: Daniels, Terry
77 West Park Road, Smethwick
Warley, West Midlands, B67 7JH(GB)
Inventor: Williams, Richard Stuart
16 Browning Road
Rugby, Warwickshire, CV21 4BT(GB)

(74) Representative: Hadfield, Robert Franklin et al
Bowdon House PO Box 20 Ashburton Road
West Trafford Park
Manchester M17 1RA(GB)

(54) Polyamide compositions.

(57) A polyamide moulding composition which comprises a thermoplastic polyamide and flame retardants. The flame retardants comprise red phosphorus, magnesium hydroxide and/or carbonate and a terpolymer of ethylene, an acrylic ester and maleic anhydride.
The composition may also include reinforcing fibres and/or fillers.

# POLYAMIDE COMPOSITIONS

This invention relates to polyamide compositions, and more particularly to such compositions which contain flame retardants.

In moulding compositions of polyamides such as nylon 6 and nylon 66 flame retardants are widely used materials and various types are known. For example brominated or chlorinated compounds may be used, particularly in conjunction with a synergist such as antimony trioxide. These materials, however, lower the electrical tracking resistance of the resulting composition, this being a particularly acute problem in glass-filled systems. Red phosphorus may be employed to obtain a higher tracking resistance with flame retardancy but the tracking resistance is still not as good as desirable in glass filled systems.

In our published UK Patent Applications No's 2,200,913A and 2,200,914A we described a combination of additives through the use of which high tracking resistance may be attained in combination with good flame retardancy, the compositions in these applications including polyamide with red phosphorus and magnesium hydroxide or magnesium carbonate and other ingredients, ie glass fibres, lubricants etc

We have now found that compositions containing, as flame retardants, red phosphorus with magnesium hydroxide or magnesium carbonate may be further improved by the presence of a further polymeric ingredient.

According to the present invention a polyamide moulding composition comprises a thermoplastic polyamide, in an amount of at least 40 per cent by weight of the composition, and flame retardants comprising red phosphorus in an amount of from 1 to 15 per cent by weight of the composition, magnesium hydroxide and/or carbonate in an amount of from 5 to 40 per cent by weight of the composition and a terpolymer of ethylene, an acrylic ester and maleic anhydride in an amount of 1 to 30 per cent by weight of polyamide in the composition.

The thermoplastic polyamide is preferably an injection mouldable polymer with a melting point above $180°$ C, such as nylon 66, and mixtures of thermoplastic polyamides may be used, for example nylon 66 with nylon 6.

The flame retardant has red phosphorus as an essential ingredient but the red phosphorus is preferably treated in order to reduce its handling difficulties, since red phosphorus alone can be very dangerous in handling. Thus the red phosphorus may be carried on a polymeric carrier, and/ or may be encapsulated with a suitable substance such as a polymer or resin.

The magnesium compound whether hydroxide or carbonate or a mixture thereof is used as a powdered solid material which may be an uncoated or coated commercial grade of material.

The terpolymer preferably is composed of a substantial proportion of units derived from the ethylene, eg 40 to 90 per cent by weight, and a small number of units derived from maleic anhydride, eg 1 to 5 per cent by weight, the remainder of the terpolymer being derived from the acrylic ester which may, for example, be ethyl acrylate or butyl acrylate.

Unexpectedly, and despite its relative flammability, the terpolymer has been found to improve the effectiveness of the flame retardant system based on the red phosphorus and magnesium hydroxide or carbonate.

The moulding compositions of this invention may contain reinforcing fillers and/or fibres such as mineral reinforcing fibres. Preferably where mineral reinforcing fibres are used they are chopped glass fibres. Preferably the amount of reinforcing filler and/or fibres in the composition is in the range 15 to 35 per cent by weight of the composition.

If desired other ingredients may also be added to the compositions of this invention, such as pigments, stabilisers, lubricants, mineral fillers etc, as is usual in a moulding composition.

We have found that in the manufacture of the compositions of this invention it can be advantageous to keep apart the magnesium hydroxide or carbonate and the red phosphorus at least until the major work has been done in compounding the red phosphorus and, where used, reinforcing fillers or fibres into the polyamide.

The magnesium hydroxide and/or carbonate is preferably compounded with polyamide separately to form a masterbatch of the magnesium compound in the polyamide, eg 50/50 proportions.

The composition may be supplied as a mixture of granules of the masterbatch and compounded granules of all the other ingredients in polyamide. Alternatively the masterbatch of magnesium compound and polyamide may be compounded into a pre-compounded mixture of the remainder of the ingredients, and a fully compounded composition supplied as normal.

Trials have shown that when the mixture of granules is supplied and used in a conventional injection moulding machine the masterbatch creates no difficulties and becomes fully integrated with the remainder of the composition.

The invention will now be described in more detail by means of examples.

Examples

In the following examples components 1 and 2 of the compositions were made by first blending the ingredients of the components, then feeding the mixture through a 30mm co-rotating twin screw extruder under the following conditions.

For Component 1 (nylon 66) 280°C barrel temperatures

For Component 2 (nylon 6) 250°C barrel temperatures

Test mouldings were made from each composition using mixtures of granules of components 1 and 2 but otherwise using standard injection moulding techniques and the samples so made were tested for flammability.

Flammability Testing

The method used was the standard Underwriters Laboratories test method UL94. V0 means that the specimens burnt for less than 10s after removal of flame, that the total burn time for ten applications of the flame on five specimens was less than 50 seconds. In addition no flaming drops are permitted. In V1 classification no specimen burns for longer than 30 seconds after the application of the flame and the total burning time for 10 specimens is less than 250 seconds. No flaming drops are permitted. The same criteria apply in V2 classification except that some flaming drops are permitted.

In addition to these classifications, the average burning time for each application of flame was calculated and the occurrence of non-flaming drops was noted (10 specimens).

Examples 1 and 2

Two compositions of nylon 66 were prepared with and without terpolymer for comparison. A two component method of manufacture was used and in each example the red phosphorus used was encapsulated in a polyamide carrier (70% by weight of red phosphorus). The magnesium hydroxide used was uncoated grade 200-06 (ex Cooksons) and the glass fibres were grade R23D from Owens Corning Fibreglass, chop length 4.5mm.

In table I below the formulations of each component of the compositions are given in parts by weight.

## TABLE I

### Component 1

| Example No | 1 | 2 |
| --- | --- | --- |
| Nylon 66 | 55.0 | 51.4 |
| Glass Fibre | 31.7 | 31.7 |
| 70% Red Phosphorus in polyamide carrier | 9.1 | 9.1 |
| Carbon Black masterbatch | 3.8 | 3.8 |
| (25% C Black, 75% Nylon 6) | | |
| Lubricant | 0.25 | 0.25 |
| *Terpolymer | – | 3.8 |

* NB – the terpolymer used was a commercially available terpolymer which was 66% by weight ethylene, 32% by weight ethyl acrylate and 2% by weight maleic anhydride.

### Component 2

(This was the same for both Examples 1 and 2)

| | |
| --- | --- |
| Nylon 6 | 49.0 |
| Magnesium Hydroxide | 49.0 |
| Carbon Black masterbatch | 2.0 |
| (25% C Black, 75% Nylon 6) | |

Moulding trials were carried out for both Examples using a blend of granules of components 1 and 2 which consisted of 80 parts by weight of component 1 to 20 parts by weight of component 2.

Table II below shows the results of the flammability and impact testing on moulded samples.

4

## TABLE II

| Example No | 1 | 2 |
|---|---|---|
| UL94 test rating | | |
| Class 3mm:   Rating | VO (marginal) | VO |
| Average Burn Time (secs) | 0.9 | 0 |
| 1.5mm Rating | Fail | VO |
| Average Burn Time (secs) | 19 | 0.1 |
| Dripping | None | None |
| Charpy Unnotched Impact Strength (KJ/M$^2$ | 58 | 56 |

It will be seen that the presence of the terpolymer in Example 2 has resulted in the poor performance at 1.5mm being converted to a VO rating, without significant loss of impact strength.

Examples 3 and 4

Two further compositions were prepared with and without terpolymer, differing from the compositions used in Examples 1 and 2 only in that a different grade of Magnesium Hydroxide was used (Hydromag ERF from Pennine Darlington Magnesia).

The compositions were made up and samples moulded in precisely the same way as in Examples 1 and 2.

Table III below shows the results of flammability and impact testing on these samples.

## TABLE III

| Example No | 3 | 4 |
|---|---|---|
| **UL94 Test Rating** | | |
| Class 3mm: Rating | VO | VO |
| Average Burn Times (secs) | 2.1 | 0 |
| Class 1.5mm: Rating | Fail | VO |
| Average Burn Time (secs) | 15 | 0 |
| Charpy Unnotched Impact Strength ($KJ/M^2$) | 58 | 56 |

**Claims**

1. A polyamide moulding composition which comprises a thermoplastic polyamide, in an amount of at least 40 per cent by weight of the composition, and flame retardants comprising red phosphorus in an amount of from 1 to 15 per cent by weight of the composition, and magnesium hydroxide and/or carbonate in an amount of from 5 to 40 per cent by weight of the composition characterised in that said composition comprises also a terpolymer of ethylene, an acrylic ester and maleic anhydride in an amount of 1 to 30 per cent by weight of polyamide in the composition.

2. A polyamide moulding composition according to claim 1 characterised in that polyamide is an injection mouldable polymer with a melting point above 180°C.

3. A polyamide moulding composition according to claim 2 wherein the polyamide is nylon 66.

4. A polyamide moulding composition according to claim 2 or 3 wherein a blend of polyamides is used.

5. A polyamide moulding composition according to claim 4 wherein the polyamide is a blend of nylon 6 and nylon 66.

6. A polyamide moulding composition according to any one of the preceding claims which is characterised by comprising reinforcing filler and/or fibres.

7. A polyamide moulding composition according to claim 6 which comprises chopped glass fibres.

8. A polyamide moulding composition according to claim 6 or 7 characterised in that the amount of reinforcing filler and/or fibres is in the range 15 to 35 per cent by weight of the composition.

9. A polyamide moulding composition according to any one of the preceding claims characterised in that the terpolymer is composed of 40 to 90 per cent by weight of units derived from ethylene and 1 to 5 per cent by weight of units derived from maleic anhydride, the remainder of the units being derived from the acrylic ester.

10. A polyamide moulding composition according to any one of the preceding claims characterised in that the acrylic ester monomer in the terpolymer is ethyl acrylate or butyl acrylate.

11. A polyamide moulding composition according to any one of the preceding claims characterised in that, until moulding, the magnesium hydroxide and/or carbonate is present in the form of a masterbatch of the magnesium compound in a polyamide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | EP-A-0278555 (BIP CHEMICALS LIMITED)<br>* claims; examples * | 1-11 | C08K3/00<br>C08L77/00<br>//(C08K3/00,3: |
| Y,D | EP-A-0278559 (BIP CHEMICALS LIMITED)<br>* claims; examples * | 1-11 | 02,3:22)(C08K3<br>/00,3:02,3:22)<br>(C08L77/00,23: |
| Y | EP-A-0255901 (BASF AKTIENGESELLSCHAFT)<br>* page 3, line 34 - page 4, line 57; claims * | 1-11 | 08) |
| Y | EP-A-0303031 (BASF AKTIENGESELLSCHAFT)<br>* claims; page 5, lines 4-10; examples * | 1-11 | |

TECHNICAL FIELDS SEARCHED (Int. Cl.5 )

C08K
C08L

The present search report has been drawn up for all claims

| Place of search | Date of completion of the search | Examiner |
|---|---|---|
| THE HAGUE | 04 MARCH 1991 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)